Europäisches Patentamt

European Patent Office

Office européen des brevets

(11) Veröffentlichungsnummer: **0 380 970**
**A2**

(12) **EUROPÄISCHE PATENTANMELDUNG**

(21) Anmeldenummer: **90100979.5**

(22) Anmeldetag: **18.01.90**

(51) Int. Cl.⁵: **F16L 47/04**

(30) Priorität: **02.02.89 DE 8901119 U**
**17.02.89 DE 3904838**
**19.09.89 DE 8911166 U**

(43) Veröffentlichungstag der Anmeldung:
**08.08.90 Patentblatt 90/32**

(84) Benannte Vertragsstaaten:
**AT BE CH DE DK ES FR GB GR IT LI LU NL SE**

(71) Anmelder: **Ruppert, Hans-Peter**
**Gottfried-Kinkel Strasse 5**
**D-6200 Wiesbaden(DE)**

(72) Erfinder: **Wendorff, Ernst**
**Waldstrasse 1**
**D-6204 Taunusstein 4(DE)**

(74) Vertreter: **Blumbach Weser Bergen Kramer**
**Zwirner Hoffmann Patentanwälte**
**Sonnenberger Strasse 100**
**D-6200 Wiesbaden 1(DE)**

(54) **Rohrverbindung und Verfahren zu ihrer Herstellung.**

(57) Bei einer Rohrverbindung besteht die Besonderheit in einem sich im Inneren des zu verbindenden Rohres eingebrachten, mit Gegenlagerflächen versehenen Gegenlagerstück, und in einer auf der Rohraußenseite vorgesehenen Klemmeinrichtung, die Druckflächen aufweist, die mit den Gegenlagerflä-chen des Gegenlagerstückes zusammenwirken. Bei dem Verfahren zur Herstellung dieser Rohrverbindung wird in das eine Ende des zu verbindenden Rohres ein Gegenlagerstück eingebracht und damit eine Ausbuchtung des Rohres erzielt, an der die Klemmeinrichtung angebracht wird.

FIG. 1

EP 0 380 970 A2

Die Erfindung betrifft eine Rohrverbindung und ein Verfahren zu ihrer Herstellung.

Insbesondere ist die Rohrverbindung für Kunststoffrohre und -schläuche geeignet.

Es ist bekannt, Kunststoffrohre, insbesondere aus Hartpolyamid, durch Verschraubungen miteinander zu verbinden, indem sich ein in der Verschraubung sitzender Schneidring in das Rohrmaterial eindrückt, wodurch die erforderliche Haftung an dem Rohrendstück hergestellt wird.

Es hat sich jedoch herausgestellt, daß derartige Rohrverbindungen bei größeren Druckbeaufschlagungen nicht mehr zufriedenstellend arbeiten. Einmal ist es erforderlich, mit sehr großer Kraft die Verschraubung zu betätigen, um den Schneidring tief in das Material hineinzudrücken, wodurch aufwendige Werkzeuge erforderlich sind, und oftmals der entsprechende Platz fehlt, um damit zu arbeiten. Zum anderen sind Grenzen dadurch gegeben, daß bei höheren Drücken der Schneidring das Material abschert und damit die Rohrverbindung auseinandergeht.

Der Erfindung liegt daher die Aufgabe zugrunde, eine Rohrverbindung der eingangs genannten Art verfügbar zu machen, die auch bei hohen Drücken eine sichere Verbindung gewährleistet und die in einfacher Weise hergestellt und montiert werden kann.

Die erfindungsgemäße Rohrverbindung zeichnet sich aus durch ein sich im Inneren des zu verbindenden Rohres eingebrachtes, mit Gegenflächen versehenes Gegenlagerstück und durch eine auf der Rohraußenseite vorgesehene Klemmeinrichtung, die Druckflächen aufweist, die mit den Gegenlagerflächen des Gegenlagerstücks zusammenwirken.

Vorteilhafte Maßnahmen und Weiterbildungen der Erfindung sind in den Unteransprüchen gekennzeichnet.

Die Erfindung macht weiterhin ein Verfahren zur Herstellung dieser Rohrverbindungen verfügbar, das darin besteht, daß in das Ende des zu verbindenden Rohres ein Gegenlagerstück eingebracht wird und damit eine Ausbuchtung des Rohres erzielt wird und daß an der Ausbuchtung eine Klemmeinrichtung angebracht wird, indem vorzugsweise hinter der Ausbuchtung des Rohres ein Klemmstück und vor der Ausbuchtung des Rohres ein Dichtungsstück angebracht wird und Klemmstück und Dichtungsstück miteinander verbunden werden.

Vorteilhafte, das erfindungsgemäße Verfahren betreffende Maßnahmen sind in weiteren Unteransprüchen gekennzeichnet. Die erfindungsgemäßen Maßnahmen dieser Rohrverbindung gewährleisten insbesondere auch bei hohen Temperaturschwankungen und einem dadurch auftretenden Materialschwund eine einwandfreie Dichtigkeit.

Die Erfindung soll nachstehend anhand von Ausführungsbeispielen unter Bezugnahme auf die Darstellungen, teilweise im Schnitt, näher erläutert werden.

Die Zeichnungen zeigen:

Fig. 1 eine Rohrverbindung mit einer ringförmigen Ausnehmung in der Klemmeinrichtung, die etwa halbkreisförmigen Querschnitt aufweist;

Fig. 2 eine abgewandelte Ausführungsform der Rohrverbindung nach Fig. 1;

Fig. 3 eine weitere Abwandlung der Ausführungsform der Rohrverbindung nach Fig. 2;

Fig. 4 die spezielle Ausführungsform einer Gerade-Verbindung;

Fig. 5 die spezielle Ausführungsform einer T-Verbindung und

Fig. 6 eine Vorrichtung zur Herstellung der Rohrverbindung.

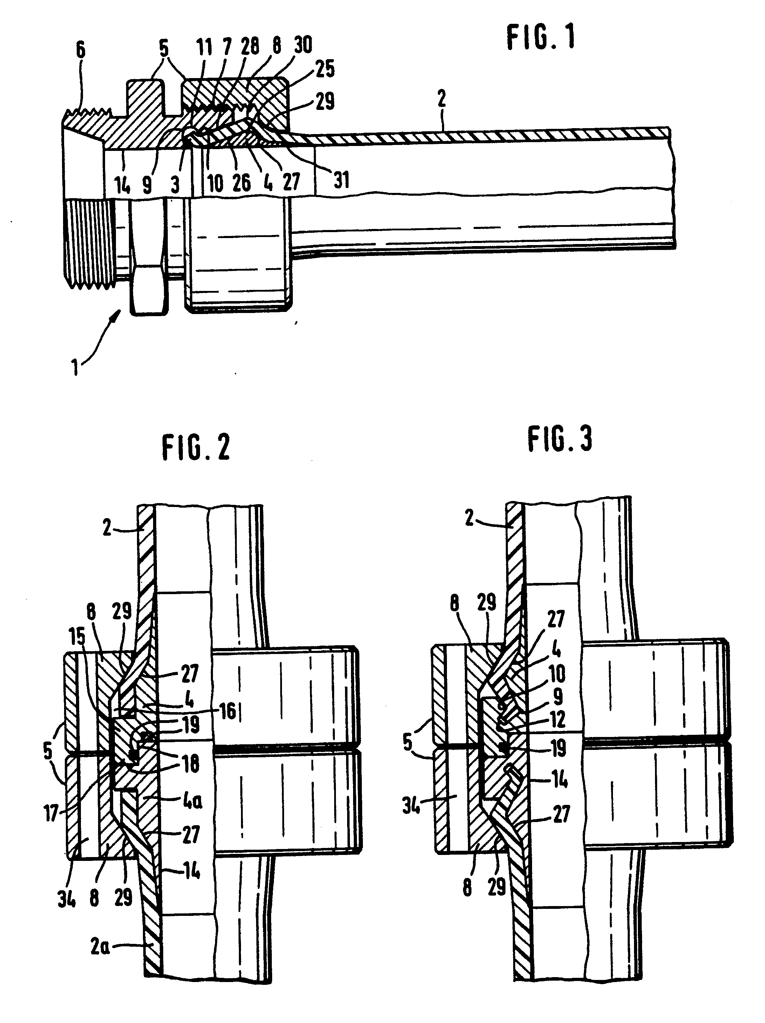

In Fig. 1 ist eine allgemein mit 1 bezeichnete Rohrverbindung dargestellt, bei der ein Kunststoffrohr 2 im Bereich seines zu verbindenden Endes 3 über ein Gegenlagerstück 4 geschoben ist. Das Gegenlagerstück 4 ist vorzugsweise als ein Gegenlagerring ausgebildet. Außen am Rohr ist eine Klemmeinrichtung 5 vorgesehen. Diese besteht aus einem Dichtungsstück 6 und einem Klemmstück 8. Das Dichtungsstück 6 ist als Fitting ausgebildet und mit einem Gewinde 7 versehen, auf das das als Überwurfmutter ausgebildete Klemmstück 8 aufgeschraubt ist.

Das Gegenlagerstück 4 weist eine nach außen sich erstreckende Ausbuchtung 25 auf, die verschiedenartig ausgebildet sein kann und im vorliegenden Fall kegelringartig vorsteht, wodurch an dem Gegenlagerstück 4 schräg zur Achse des Rohres 2 verlaufende Druckflächen 26 und 27 ausgebildet sind. Das Dichtungsstück 6 weist eine mit der Gegenfläche 26 des Gegenlagerstücks 4 zusammenwirkende Druckfläche 28 auf, während das Klemmstück 8 eine Druckfläche 29 aufweist, die mit der Gegenlagerfläche 27 zusammenwirkt. Die Gegenlagerflächen 26, 27 können spitz aufeinander zu laufen, es kann aber an der Spitze 30 auch eine leichte Rundung vorgesehen sein. In Richtung vom Ende des Rohres 2 weg verlaufend ist das Gegenlagerstück 4 mit einer Verjüngung versehen, die auch, was nicht dargestellt ist, aus einer rohrartigen Verlängerung 31 bestehen kann. In dem Dichtungsstück 6 befindet sich im Bereich der inneren Begrenzungswand 14 des Rohres 2 eine Ausnehmung 9, in der das Rohrende 3 zu liegen kommt. Wenn das Material des Kunststoffrohres 2 sich aufgrund von Temperaturänderungen zusammenzieht, so daß ein gewisser Hohlraum in der Ausnehmung 9 entsteht, wird eine besondere Dichtwirkung dadurch erzielt, daß das Rohrende 3 fest an der Einkerbung 10 zu liegen kommt. Um diese Wirkung zu erhöhen, kann die Ausnehmung 9 eine nach außen sich erstreckende Vorwölbung 11 aufweisen. Die Ausnehmung 9 ist als umlaufender Ring mit etwa halbkreisförmigem Querschnitt dargestellt, kann aber auch aus einem schräg nach außen sich erstreckenden Schlitz bestehen, in den das Rohrende 3 bei hergestellter Rohrverbindung eingeschoben ist. Der Schlitz entspricht etwa der Stärke der Wand des Rohrendes 3, und auch hier wird bei einem Schrumpfvorgang an einer entsprechenden Einkerbung 10 eine besonders gute Dichtwirkung erzielt.

In den Ausführungsformen nach den Fig. 2 und 3 ist die Ausnehmung 9 an dem innenliegenden Gegenlagerstück 4 vorgesehen. Im übrigen weisen in diesen Figuren gleiche Teile die gleichen Bezugszeichen auf.

Wie aus Fig. 2 zu ersehen ist, hat das innen befindliche Gegenlagerstück 4 einen sich nach außen erstreckenden Flansch 15 und bildet dadurch eine abgewandelte, nach außen offene Ausnehmung 16, in die das Rohrende 3 des zu verbindenden Rohres 2 zu liegen kommt. Der Flansch 15 des Gegenlagerstückes 4 ist mit einem Vorsprung 17 versehen, der in eine komplementäre Ausnehmung eines Gegenlagerstückes 4a des anderen zu verbindenden Rohres 2a eingreift. Wie weiter aus den Fig. 2 und 3 zu entnehmen ist, können die außen liegenden Dichtungsflächen 18 mit Ausnehmungen versehen sein, in denen O-Ringdichtungen 19 vorgesehen sind.

Fig. 3 zeigt eine Ausnehmung 9 in den beiden innen liegenden Gegenlagerstücken 4 in Form eines Schlitzes 12, wobei jedoch die ringförmige Ausnehmung 9 auch entsprechend der Darstellung in Fig. 1 mit etwa halbkreisförmigem Querschnitt ausgestattet sein kann. In jedem Fall ist die Einkerbung 10 vorhanden. Es versteht sich, daß auch Kombinationen verschiedener Ausnehmungen mit entsprechend gestalteten Gegenlagerstücken 4 möglich sind.

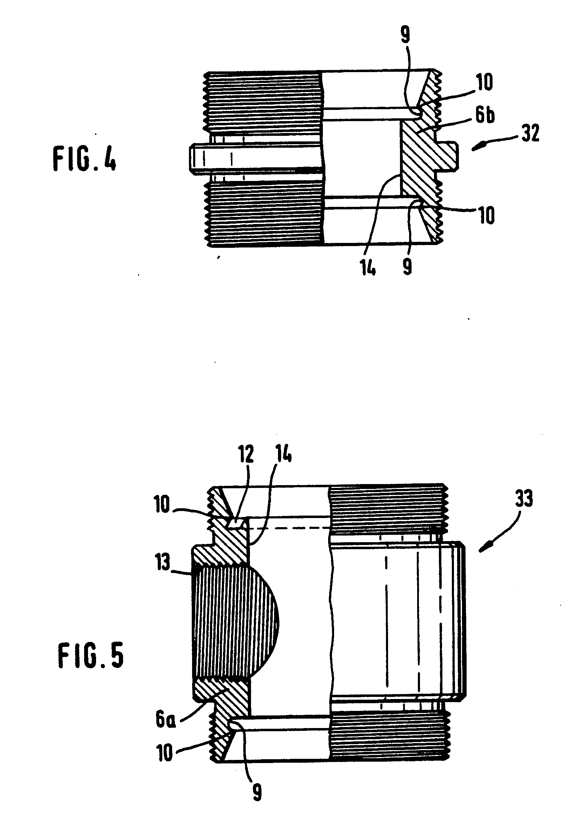

In Fig. 4 ist eine gerade Einschraubverbindung 32 gezeigt, d. h. die beiden gegenüberliegenden Rohrenden gelangen in die Ausnehmung 9 eines gemeinsamen Rohrverschraubungsfitting 6b, der zu einer Klemmeinrichtung 5 gehört, wie sie in den Fig. 1 bis 3 dargestellt ist. Zieht sich das Rohr durch einen eventuellen Schrumpfvorgang zurück, so wird auch hier an den Einkerbungen 10 eine besondere Dichtwirkung erzielt.

Fig. 5 zeigt für T-Verbindungen 33 ein Verschraubungsfitting 6a mit einer Abzweigöffnung 13, die mit einem Gewinde versehen ist und in die ein Rohr einschraubbar ist. Im übrigen sind an dem Rohrfitting 6a die Ausnehmungen 9 dargestellt, die in den beschriebenen, unterschiedlichen Ausführungsformen nach den Fig. 1 bis 3 ausgeführt sein können, wobei in der Praxis in der Regel entweder die eine oder die andere Ausführungsform, nämlich entweder die ringförmige Ausnehmung 9 oder eine schlitzförmige Ausnehmung 12 vorgesehen sein wird, weniger unterschiedliche Ausnehmungen 9, 12, wie es Fig. 5 zum Zwecke der Veranschaulichung zeigt.

Wenn die Klemmeinrichtung 5 angezogen wird, d. h. das Klemmstück 8 in Form der Überwurfmutter nach Fig. 8 auf dem Dichtungsstück 6 festgeschraubt wird, wird die Wand des Rohres 2 zwischen der Druckfläche 28 des Dichtungsstückes 6 und der dazu gehörigen Gegenlagerfläche 26 des Gegenlagerstückes 4 und der Druckfläche 29 des Klemmstückes 8 und der dazu gehörigen Gegenlagerfläche des Gegenlagerstückes 4 festgeklemmt, so daß eine zuverlässige Rohrverbindung hergestellt ist. Das gleiche gilt auch, wenn die beiden Klemmstücke 8 der Klemmeinrichtung 5 nach den Fig. 2 und 3 mit Hilfe von nicht dargestellten Schraubenbolzen, die durch die Bohrungen 34 in den Klemmstücken 8 verlaufen, zusammengezogen werden. Die Klemmflächen 29 der Klemmstücke 8 wirken hier ebenfalls mit den Gegenlagerflächen 27 der Gegenlagerstücke 4 zusammen, wobei die Dichtflächen ebenfalls in dem Gegenlagerstück 4 vorgesehen sind.

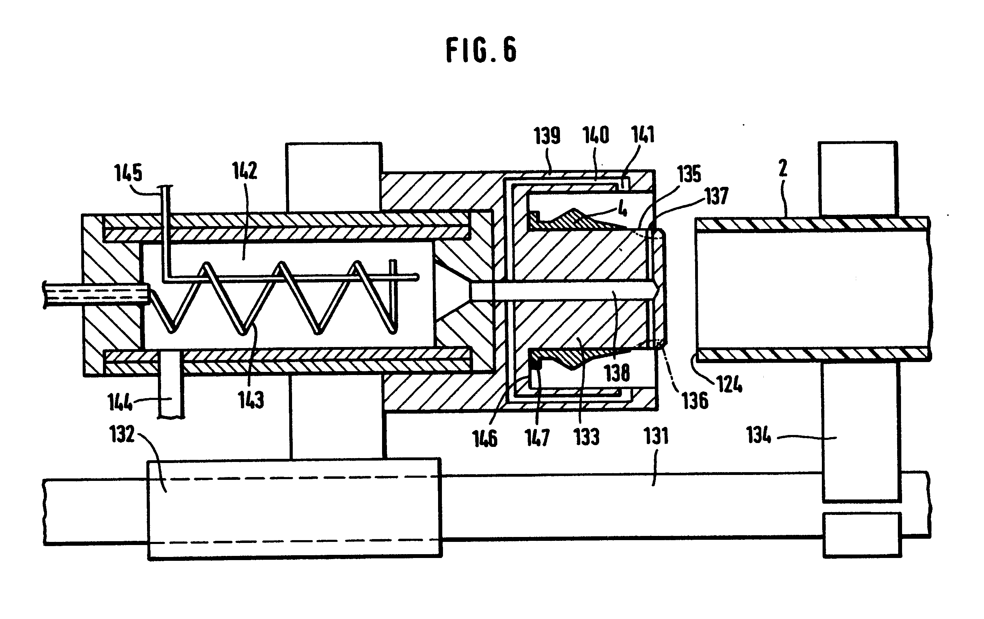

In Fig. 6 ist eine Vorrichtung zur Herstellung der Rohrverbindung dargestellt. In das die Stirnkante 124 tragende Ende des zu verbindenden Rohres 2 wird das Gegenlagerstück 4 eingeschoben und damit die Ausbuchtung des Rohres 2 erzielt, an der die Klemmeinrichtung 5 angebracht wird. Um das Einschieben des Gegenlagerringes 4 zu erleichtern, wird das zu verbindende Rohr 1 erwärmt, was mit Hilfe eines heißen Mediums, wie Gasen oder Ölen, oder Wärmestrahlung erreicht werden kann. Auf einer fest angeordneten Schiene 131 ist über einen Schlitten 132 ein Kolben 133 bewegbar angeordnet, während das zu verbindende Rohr 2 mit Hilfe einer Haltevorrichtung 134 in Bezug auf die Schiene 131 festgelegt ist. Der Kolben 133 weist einen Innendurchmesser auf, der etwa dem des zu verbindenden Rohres 1 entspricht und auf dem das Gegenlagerstück 4 aufschiebbar ist. Im Bereich des vorderen Endes 135 ist der Kolben 133 verjüngt oder weist größere, ihn verjüngende Ausnehmungen 136 auf, die gestrichelt dargestellt sind. Im vorderen Bereich 135 treten Kanäle 137 aus, die mit einer mittigen Zuführbohrung 138 verbunden sind. Der Kolben 133 ist weiterhin mit einem ihn im Abstand umgebenden Ringkörper 139 verbunden, in dem Kanäle 140 vorgesehen sind, die gegenüber dem vorderen Bereich 135 des Kolbens 133 ihre Austritte 141 aufweisen, die auf den Kolben 133 gerichtet sind. Hinter dem Kolben 133 ist eine Heizkammer 142 vorgesehen, die mit einer Heizeinrichtung 143 und einer Druckmittelzuführung 144 versehen ist. Ein Temperaturfühler 145 dient zur Regelung bzw. Einstellung der gewünschten Erwärmung des Mediums, das über die Zuführungsbohrung 138 in die Kanäle 137 und 140, 141 ausströmt. Es kann auch eine nicht dargestellte Heizeinrichtung vorgesehen sein, die beispielsweise durch Wärmestrahlung das Rohr 1 erwärmt. Das hintere Ende des Kolbens 133 weist eine sich seitlich erstreckende Lagerfläche 146 auf, an die die Stirnkante 147 des Gegenlagerstücks 4 bei der Vorschubbewegung des Kolbens 133 zur Anlage kommt, wenn diese sich in das Innere des Rohres 2 vorschiebt. Dabei wird das erwärmte Rohr 2 von dem auf dem Kolben 133 sitzenden Gegenlagerstück 4 nach außen bewegt und die Wand des Rohres 2 über die Ausbuchtung des Gegenlagerringes 4 geschoben. Auf diese Weise wird in das Rohrinnere der Gegenlagerring eingebracht und anschließend auf der Außenseite des Rohres 2 die Klemmeinrichtung 5 befestigt, wie es insbesondere in den Fig. 1 bis 3 dargestellt ist.

Der Kolben 133 kann als auswechselbarer Gerätekopf für verschiedene Größen der Gegenlagerstücke 42 entsprechend unterschiedlicher Innendurchmesser der zu verbindenden Rohre 2 ausgestaltet sein.

Die Erfindung macht somit eine zuverlässige Rohrverbindung verfügbar, die hohen Drücken standhält und auch ohne Schwierigkeiten bei bereits verlegten Rohrleitungssystemen Anwendung finden kann. Neben einer kostengünstigen Herstellung ist auch eine leichte Montage gewährleistet.

Bezugszeichenliste

1 Rohrverbindung
2, 2a Kunststoffrohr
3 Rohrende
4, 4a Gegenlagerstück
5 Klemmeinrichtung
6 Dichtungsstück
6a, 6b Rohrverschraubungsfitting
7 Gewinde
8 Klemmstück
9 ringförmige Ausnehmung
10 Einkerbung
11 Vorwölbung
12 schlitzförmige Ausnehmung
13 Abzweigöffnung
14 Begrenzungswand
15 Flansch
16 Ausnehmung
17 Vorsprung
18 Dichtungsfläche
19 O-Ringdichtung
25 Ausbuchtung
26, 27 Gegenlagerfläche
28, 29 Druckfläche
30 Spitze

31 rohrartige Verlängerung
32 Einschraubverbindung
33 T-Verbindungen
34 Bohrungen
124 Stirnkante
131 Schiene
132 Schlitten
133 Kolben
137 Kanäle
138 Zuführungsbohrung
139 Ringkörper
140 Kanäle
141 Austritte
142 Heizkammer
143 Heizeinrichtung
144 Druckmittelzuführung
145 Temperaturfühler
146 Lagerfläche
147 Stirnkante

Ansprüche

1. Rohrverbindung,
gekennzeichnet durch ein sich im Inneren des zu verbindenden Rohres (2) eingebrachtes, mit Gegenlagerflächen (26, 27) versehenes Gegenlagerstück (4) und durch eine auf der Rohraußenseite vorgesehene Klemmeinrichtung (5), die Druckflächen (28, 29) aufweist, die mit den Gegenlagerflächen (26, 27) des Gegenlagerstückes (4) zusammenwirken.

2. Rohrverbindung nach Anspruch 1,
dadurch gekennzeichnet, daß das Gegenlagerstück aus einem Gegenlagerring (4) besteht, der mindestens eine sich vom Umfang nach außen erstreckende Ausbuchtung (25), vorzugsweise in Form eines über den Umfang sich erstreckenden Ausbuchtungsring, besitzt, die in das Rohr (2) eingedrückt ist.

3. Rohrverbindung nach Anspruch 2,
dadurch gekennzeichnet, daß die Ausbuchtung (25) kegelartig mit einem Winkel von etwa 30° vorsteht.

4. Rohrverbindung nach Anspruch 2 oder 3,
dadurch gekennzeichnet, daß der Gegenlagerring (4) eine rohrartige Verlängerung (31) aufweist, die vorzugsweise mit einer Verjüngung und einem Winkel von etwa 10° ausläuft.

5. Rohrverbindung nach einem der Ansprüche 1 bis 4, dadurch gekennzeichnet, daß die Klemmeinrichtung (5) aus einem hinter der Ausbuchtung (25) vorgesehenen Klemmstück (8) und einem vor der Ausbuchtung (25) angeordneten Dichtungsstück (6) besteht, die beide miteinander verbunden sind.

6. Rohrverbindung nach Anspruch 5,
dadurch gekennzeichnet, daß das Dichtungsstück (6) mit einem Außengewinde versehen ist und das Klemmstück (8) in Form einer Überwurfmutter auf das Dichtungsstück (6) aufgeschraubt ist oder daß Dichtungsstück (6) und Klemmstück (8) mit Hilfe einer Schraubverbindung (34) verbunden sind.

7. Rohrverbindung nach Anspruch 5, dadurch gekennzeichnet, daß die Klemmeinrichtung (5) aus zwei miteinander verbundenen Klemmstücken (8) besteht..

8. Rohrverbindung nach einem der Ansprüche 1 bis 7, dadurch gekennzeichnet, daß im Bereich des Rohrendes eine ringförmige Ausnehmung (9) mit vorzugsweise etwa halbkreisförmigem Querschnitt vorgesehen ist, in die das Rohrende (3) einschiebbar ist, und daß die Ausnehmung (9) im Bereich der Öffnung, durch die das Rohrende einschiebbar ist, mit einer Einkerbung (10) versehen ist.

9. Rohrverbindung nach einem der Ansprüche 1 bis 7, dadurch gekennzeichnet, daß die Ausnehmung (9) etwa schlitzförmig (12) der Stärke der Wand des zu verbindenden Rohres (2) entspricht und schräg nach außen verläuft.

10. Rohrverbindung nach einem der Ansprüche 1 bis 9, dadurch gekennzeichnet, daß das Rohrende (3) zwischen dem innenliegenden Gegenlagerstück (4) und der außen befindlichen Klemmeinrichtung (5) bis zum Ende hin schräg nach innen verläuft und die Ausnehmung (9) in der Nähe der inneren Begrenzungswand (14) der Klemmeinrichtung (5) das Rohrende (3) nach außen umbiegt.

11. Rohrverbindung nach einem der Ansprüche 1 bis 9, dadurch gekennzeichnet, daß das im Bereich des zu verbindenden Rohrendes (3) das innen befindliche Gegenlagerstück (4) einen sich nach außen erstreckenden Flansch (15) aufweist und eine Ausnehmung (9, 16) für das Rohrende (3) bildet.

12. Rohrverbindung nach Anspruch 11, dadurch gekennzeichnet, daß der Flansch (15) des Gegenlagerstückes (4) mit einem ringförmigen Vorsprung (17) versehen ist, der in eine komplementäre Ausnehmung eines Gegenlagerstückes (4a) des anderen zu verbindenden Rohrendes (2a) eingreift.

13. Verfahren zur Herstellung einer Rohrverbindung nach einem der Ansprüche 1 bis 12, dadurch gekennzeichnet, daß in das Ende des zu verbindenden Rohres ein Gegenlagerstück eingebracht wird und damit eine Ausbuchtung des Rohres erzielt wird und daß an der Ausbuchtung eine Klemmeinrichtung angebracht wird.

1-. Verfahren nach Anspruch 13, dadurch gekennzeichnet, daß das zu verbindende Rohr, insbesondere aus einem Kunststoffmaterial, erwärmt wird und daß das Gegenlager von der Stirnseite aus eingedrückt wird.

15. Verfahren nach Anspruch 14, dadurch gekennzeichnet, daß das zu verbindende Rohr mit Hilfe eines aus einem Gas oder einer Flüssigkeit bestehenden Mediums oder durch Wärmestrahlung erwärmt wird.

FIG. 1

FIG. 2

FIG. 3

FIG.4

FIG.5

FIG. 6